# FASCICULE DE BREVET EUROPEEN

(11) **EP 0 415 311 B1**
(45) Date de publication et mention de la délivrance du brevet: **02.03.1994**
(21) Numéro de dépôt: 90116372.5
(22) Date de dépôt: 27.08.1990
(51) Int. Cl.: F16K 7/07

(54) **Vanne et dispositif utilisant ladite vanne**
Ventil und mit diesem Ventil ausgerüstete Vorrichtung
Valve and device using the same

(30) Priorité: 01.09.1989 FR 8911486
(43) Date de publication de la demande: 06.03.1991
(73) Titulaire: ALCATEL CIT, 75008 Paris (FR)
(72) Inventeur: Mathieu, Luc, c/o Alcatel Cit, Etabl. d'Annecy, F-74009 Annecy Cedex (FR); Paquet, Jean-Marc, F-74000 Annecy Le Vieux (FR)
(74) Mandataire: Weinmiller, Jürgen

(56) Documents cités:
- FR-A- 1 595 857
- FR-A- 2 458 013
- GB-A- 2 054 041
- US-A- 4 645 174

## Description

La présente invention concerne un dispositif anti-coup de bélier pour une installation comportant deux zones à des pressions P₁ et P₂ différentes, telles que P₁ > P₂, réunies par une conduite munie d'une première vanne de mise en communication.

Le document GB-A-2 054 041 décrit par exemple un dispositif dans lequel la conduite à protéger comprend un court tronçon à diamètre élargi qui est équipé d'un anneau élastique gonflable, gonflé à la pression correspondant à la pression interne de la conduite dans son état stable. La présente invention propose un système utilisant une vanne à fermeture non totale comme par exemple celle décrite dans le document US-A-4 645 174.

Ainsi, l'invention a pour objet un dispositif anti-coup de bélier comme dit ci-dessus, caractérisé en ce qu'une seconde vanne, comprenant un tube rigide à l'intérieur duquel est situé un tube souple dont les deux extrémités sont solidarisées d'une manière étanche aux extrémités du tube rigide, un orifice de commande étant aménagé dans la paroi du tube rigide au voisinage de sa région médiane, un noyau étant en outre disposé à l'intérieur du tube souple, de section inférieure à la section interne du tube à l'état de repos, et ledit noyau possédant un passage interne calibré, est placée dans ladite conduite, en série avec ladite première vanne de mise en communication, la commande de ladite seconde vanne par son orifice de commande étant effectuée par le moyen d'un distributeur pneumatique à tiroir, ledit distributeur étant à deux voies de communication permettant la liaison, soit entre une sortie commune c et une première entrée a, soit entre la sortie c et une seconde entrée b, et comportant deux entrées D et E de pilotage pour la commande du déplacement du tiroir assurant lesdites communications, ledit distributeur étant du type à pilotage préférentiel assurant la communication a-c lorsque les entrées de pilotage D et E sont soumises à des pressions égales, la sortie c étant reliée audit orifice de commande de ladite vanne, l'entrée a, à une pression P₃ ≦ P₂ et l'entrée b à une pression Pa > P₁ , l'entrée de pilotage D étant reliée à la zone à la pression P₁ et l'entrée de pilotage E étant reliée à la zone à la pression P₂ .

L'invention va maintenant être décrite en se référant au dessin annexé dans lequel :
- La figure 1 représente schématiquement une dite seconde vanne telle qu'utilisée dans le dispositif anti-coup de bélier de l'invention.
- La figure 2 représente une installation de mise en communication de deux réservoirs à des pressions différentes, muni d'un dispositif anti-coups de bélier selon l'invention utilisant la vanne de la figure 1.

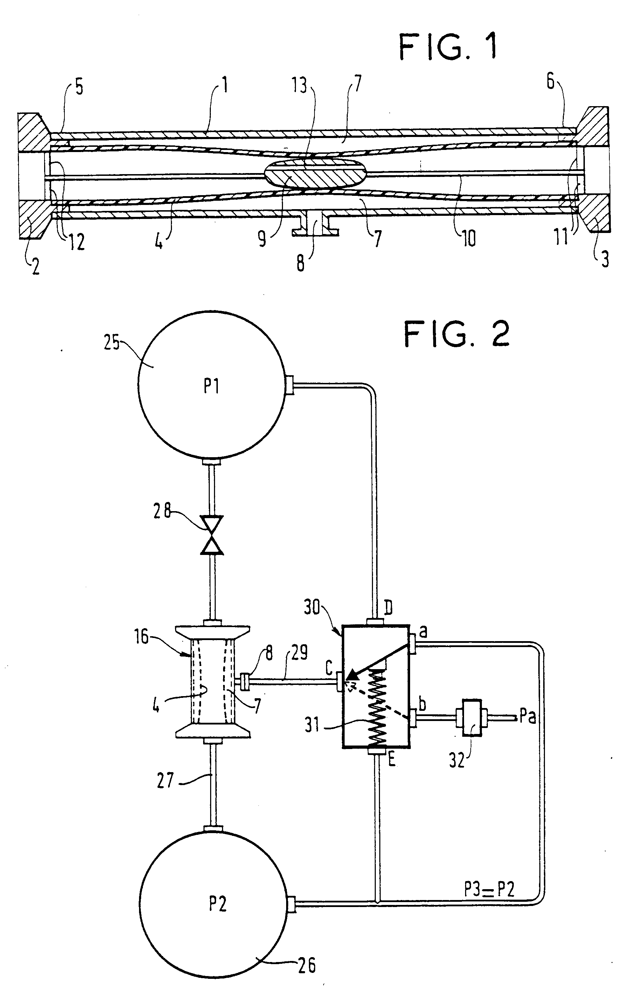

En se reportant à la figure 1, la vanne, appelée par la suite seconde vanne, comprend un tube rigide 1 muni de deux embouts de raccordement 2 et 3. A l'intérieur du tube rigide est situé un tube souple 4 dont les deux extrémités 5 et 6 sont solidarisées d'une manière étanche aux extrémités du tube rigide 1. La partie centrale du tube souple 4 est libre de telle sorte qu'un espace libre 7 existe entre le tube rigide et le tube souple. Un orifice de commande 8 est aménagé dans la paroi du tube rigide au voisinage de sa région médiane. Un noyau 9 est disposé à l'intérieur du tube souple 4. Ce noyau 9 est maintenu par un axe 10 lui-même fixé aux extrémités 2 et 3 par exemple par l'intermédiaire de rayons tels que 11,12. Le noyau 9 possède un passage interne 13 calibré. La mise en pression de l'espace libre 7, à une pression supérieure à celle qui règne à l'intérieur du tube souple 4, par l'orifice 8, permet ainsi de commander la fermeture de la seconde vanne par constriction du tube souple contre le noyau 9. Lorsque la pression dans l'espace libre 7 est égale ou inférieure à la pression dans le tube souple, son élasticité maintient le tube souple ouvert. Le passage calibré 13 assure une section de passage minimale.

En se référant maintenant à la figure 2, on va décrire un dispositif anti-coup de bélier selon l'invention, pour une installation comportant une première zone 25 à une pression P₁ et une seconde zone 26 à une pression P₂ telle que P₁ > P₂ réunies par une conduite 27 munie d'une première vanne de mise en communication 28. On sait que dans un tel cas, l'ouverture brutale de la première vanne 28 risque d'entraîner des coups de bélier dommageables pour l'installation.

L'utilisation d'une seconde vanne 16 , à fermeture non totale, telle que celle décrite ci-dessus, permet d'assurer une connexion progressive entre les deux zones 25 et 26 une fois la vanne de mise en communication 28 ouverte,sans précautions particulières.

La seconde vanne 16 est disposée en série avec la première vanne de mise en communication 28, et la commande de la seconde vanne est effectuée par son orifice de commande 8 relié, par une conduite 29, à la sortie c d'un distributeur pneumatique à tiroir 30.

Ce distributeur comporte une sortie commune c et deux entrées a et b et permet soit la liaison entre c et a, soit la liaison entre c et b. Le distributeur 30 comporte en outre deux entrées de pilotage D et E pour la commande du déplacement du tiroir assurant les communications ci-dessus.

Ce distributeur 30 est du type à pilotage préférentiel assurant la communication a-c, lorsque les entrées de pilotage D et E sont soumises à des pressions égales. Ce sens préférentiel est figuré par un ressort 31. Dans une réalisation pratique, il peut s'agir du tiroir lui-même dont la section sur laquelle s'exerce la pression du côté E est plus grande que la section sur laquelle s'exerce la pression du côté D. Un tel distributeur est bien connu en soi.

La sortie c est ainsi reliée à l'orifice de commande 8 de la vanne 16, l'entrée de pilotage D au réservoir 25 et l'entrée de pilotage E au réservoir 26.

L'entrée a est reliée à une pression P₃ ≦ P₂ . Dans le cas de la figure, l'entrée a est directement reliée au réservoir 26 et est donc à une pression P₂ Enfin, l'entrée b est soumise à une pression Pₐ > P₁ . Dans le cas où le réservoir 25 est une enceinte à vide, l'entrée b est ouverte à la pression atmosphérique ou à un gaz pressurisé (neutre par exemple), par l'intermédiaire du filtre 32.

C'est le cas envisagé dans le fonctionnement indiqué ci-après.

Les réservoirs 25 et 26 étant hors communication, la première vanne de mise en communication 28 étant fermée, l'entrée de pilotage D est à la pression P₁, supérieure à la pression P₂ à laquelle se trouve l'entrée de pilotage E, la communication existante dans le distributeur est donc la communication b-c représentée sur la figure 2 en trait pointillé. L'espace libre 7 de la vanne 16 est donc soumis à la pression atmosphérique Pa supérieure à celle P₂ à laquelle est soumis l'intérieur du tube souple 4 de la vanne 16.
Cette pression Pa contraint donc le tube souple à se fermer. Cette fermeture n'est pas totale car la vanne 16 est à obturation non totale comportant un noyau avec passage calibré ou bien sans noyau mais avec tube souple suffisamment rigide pour éviter la fermeture totale.

Lors de l'ouverture de la vanne 28 de mise en communication, l'équilibre de pression se fait lentement au travers de la vanne 16 faiblement passante. Lors de l'équilibrage des pressions P₁ et P₂ , ou un peu avant, le distributeur à pilotage préférentiel passe de la communication b-c à la communication a-c représentée en trait continu sur la figure. L'espace 7 est alors à la pression P₂ , la même que celle qui règne à l'intérieur du tube souple 4.

L'élasticité du tube souple 4 permet à celui-ci de reprendre sa position ouverte.

La mise en communication des deux réservoirs est ainsi effectuée automatiquement sans à-coup.

## Revendications

1. Dispositif anti-coups de bélier pour une installation comportant deux zones (25-26) à des pressions P₁ et P₂ différentes telles que P₁ > P₂ , réunies par une conduite (27) munie d'une première vanne de mise en communication (28), caractérisé en ce qu'une seconde vanne (16), comprenant un tube rigide (1) à l'intérieur duquel est situé un tube souple (4) dont les deux extrémités (5,6) sont solidarisées d'une manière étanche aux extrémités du tube rigide, un orifice de commande (8) étant aménagé dans la paroi du tube rigide au voisinage de sa région médiane, un noyau (9) étant en outre disposé à l'intérieur du tube souple, de section inférieure à la section interne du tube à l'état de repos, et ledit noyau possédant un passage interne calibré (13), est placée dans ladite conduite, en série avec ladite première vanne (28) de mise en communication, la commande de ladite seconde vanne (16) par son orifice de commande (8) étant effectuée par le moyen d'un distributeur pneumatique à tiroir (30), ledit distributeur étant à deux voies de communication permettant la liaison, soit entre une sortie commune c et une première entrée a, soit entre la sortie c et une seconde entrée b, et comportant deux entrées D et E de pilotage pour la commande du déplacement du tiroir assurant lesdites communications, ledit distributeur étant du type à pilotage préférentiel, assurant la communication a-c lorsque les entrées de pilotage D et E sont soumises à des pressions égales, la sortie c étant reliée audit orifice de commande (8) de ladite vanne, l'entrée a, à une pression P₃ ≦ P₂ et l'entrée b, à une pression Pa > P₁, l'entrée de pilotage D étant reliée à la zone (25) à la pression P₁ et l'entrée de pilotage E étant reliée à la zone (26) à la pression P₂ .

## Claims

1. An anti-hammer device for an installation comprising two zones (25, 26) at different pressures P1 and P2 such that P1 > P2, the two zones being interconnected by a duct (27) provided with an on/off first valve (28), the device being characterized in that a second valve (16), comprising a rigid tube (1) in which a flexible tube (4) is situated with the two ends (5, 6) of the flexible tube being connected in sealed manner to the ends of the rigid tube, a control orifice (8) being provided through the wall of the rigid tube in the vicinity of its middle region, and a core (9) also being disposed inside the flexible tube, the core being smaller in cross-section than the inside section of the tube when in the rest state, and the said core having a calibrated internal passage (13), is placed in said duct in series with said on/off first valve (28), said second valve (16) being controlled via its control orifice (8) by means of a pneumatic slide valve (30), said slide valve having two communication paths enabling a colon outlet C to be connected either to a first inlet a or else to a second inlet b, the slide valve including two control inlets D and E for controlling displacement of the slide which establishes said communication paths, said slide valve being of the preferential control type with communication between a and C being provided when the control inlets D and E are subjected to equal pressures, outlet C being connected to said control orifice (8) of said valve, the inlet a being connected to a pressure P3 ≦ P2, and the inlet b being connected to a pressure Pa > P1, control inlet D being connected to the zone (25) at pressure P1 and control inlet E being connected to the zone (26) at pressure P2.

## Patentansprüche

1. Rückschlag-Dämpfungsvorrichtung für eine Einrichtung mit zwei Bereichen (25-26) unterschiedlichen Drucks P₁ und P₂, mit P₁ > P₂, die durch eine Leitung (27) verbunden sind, welche mit einem ersten Verbindungsventil (28) versehen ist, dadurch gekennzeichnet, daß in Reihe mit dem ersten Verbindungsventil (28) ein zweites Ventil (16) mit einem starren Rohr (1) angeordnet ist, in dem ein biegsames Rohr (4) sitzt, dessen beide Enden (5, 6) dicht mit den Enden des starren Rohrs verbunden sind, wobei eine Steueröffnung (8) in der Wand des starren Rohrs in der Nähe seiner mittleren Zone angebracht ist und weiter im Inneren des biegsamen Rohrs ein Kern (9) angeordnet ist, dessen Querschnitt geringer ist als der Innenquerschnitt des Rohrs im Ruhezustand und der einen inneren kalibrierte Durchlaß (13) aufweist, wobei die Steuerung des zweiten Ventils (16) durch dessen Steueröffnung (8) mittels eines pneumatischen Verteilers mit Schieber (30) geschieht, der zwei Verbindungsstrecken aufweist, die die Verbindung entweder zwischen einem gemeinsamen Ausgang c und einem ersten Eingang a oder zwischen dem Ausgang c und einem zweiten Eingang b erlauben und zwei Steuereingänge D und E zur Steuerung der Verschiebung des Schiebers aufweist, der diese Verbindungen bewirkt, wobei dieser Verteiler bevorzugt die Verbindung a-c herstellt, wenn die Steuereingänge D und E gleichen Drücken ausgesetzt sind, wobei der Ausgang c mit der Steueröffnung (8) des Ventils verbunden ist, der Eingang a mit einem Druck P₃/P₂ und der Eingang b mit einem Druck Pₐ > P₁ beaufschlagt ist, während der Steuereingang D mit dem auf dem Druck P₁ liegenden Bereich (25) und der Steuereingang E mit dem auf dem Druck P₂ liegenden Bereich (26) verbunden ist.
